# EUROPEAN PATENT SPECIFICATION

(11) **EP 1 690 757 B1**
(45) Date of publication and mention of the grant of the patent: **11.06.2008**
(21) Application number: 06000298.7
(22) Date of filing: 09.01.2006
(51) Int. Cl.: B60R 22/44, B60R 22/46

(54) **Seat belt retractor, seat belt apparatus, and vehicle with a seat belt apparatus**
Sitzgurtstraffer, Sitzgurtvorrichtung und Fahrzeug mit einer Sitzgurtvorrichtung
Rétracteur de ceinture de sécurité, dispositif de ceinture de sécurité et véhicule equipé d'un tel dispositif

(30) Priority: 09.02.2005 JP 2005033651
(43) Date of publication of application: 16.08.2006
(73) Proprietor: TAKATA CORPORATION, Minato-ku, Tokyo 106-8510 (JP)
(72) Inventor: Takao, Masato, Minato-ku Tokyo 106-8510 (JP); Tanaka, Koji, Minato-ku Tokyo 106-8510 (JP); Inuzuka, Koji, Minato-ku Tokyo 106-8510 (JP)
(74) Representative: Vossius & Partner

(56) References cited:
- US-A- 5 788 281
- US-A1- 2001 037 907
- US-A1- 2004 195 420

## Description

The present invention relates to a technology for developing a seat belt retractor to be installed in a vehicle.

Conventionally, a seat belt apparatus is known, which is structured to protect an occupant in a vehicle by a seat belt (webbing) restraining the occupant. For example, Patent Document 1 listed below discloses a structure of a seat belt retractor of a seat belt apparatus, in which a spool (winding shaft) can be rotated for winding and unwinding of a seat belt by an electric motor.
US-A-5,788,281 relates to a seat belt retractor which is controlled based on the condition of the vehicle relative to an object and/or the condition of the vehicle in order to more efficiently and comfortably protect the occupant in an emergency. A CPU judges the condition of the vehicle relative to an object in front of the vehicle based on a detection signal from a front object detection sensor and drives an electric motor depending on the result of the judgment. In D1, the belt tension of the seat belt is controlled corresponding to the condition of the vehicle relative to said object.

The technology described in Japanese translation of PCT international application No. 2003-507252 (Patent Document 1) gives us a possibility of using an electric motor to conduct the action of the spool for winding or unwinding the seat belt, as a structure of the seat belt retractor. With regard to the design of such seat belt apparatuses, further technical requirement exists for quickly storing the seat belt in a suitable mode. Specifically, it is required to resolve various disadvantages, for example, that when the storing operation of the seat belt is needed, the seat belt is kept in the unwound state without being stored and that when the seat belt is used, that is, the storing operation of the seat belt is not needed, the action for storing the seat belt is started.
Therefore, the present invention has been made in view of the above request and it is an object of the present invention to provide a technology effective for the increase in reliability relating to the storing operation of a seat belt in a seat belt retractor to be installed in a vehicle.

For achieving the object, the present invention is made. The present invention can be typically adopted to a seat belt retractor to be installed in an automobile. In addition, the present invention can be applied to a technology for a seat belt retractor to be installed in a vehicle other than the automobile.

The first invention of the present invention for achieving the aforementioned object is a seat belt retractor claimed in claim 1.
The seat belt retractor claimed in claim 1 comprises at least a spool, an electric motor, a power transmission mechanism, a detection sensor, and a control means.
The spool of this invention is a member which is capable of winding or unwinding the seat belt. The seat belt is a long belt to be worn by a vehicle occupant seated in a seat and is sometimes called "webbing". Typically, the vehicle occupant seated in the vehicle seat is restrained by the seat belt when restraint is required such as a vehicle collision, thereby ensuring the protection of the vehicle occupant.
The power transmission mechanism of the present invention is a mechanism which transmits the power of the electric motor of the present invention to the spool so as to achieve the winding action and the unwinding action of the spool.
The detection sensor is a sensor which detects information about behavior of a spool-side member. The "spool-side member" used here includes members which act according to the action of the spool, such as the seat belt, as well as the spool itself. In addition, the "information about behavior" used here may be one or more suitably selected from condition of the spool-side member whether it is moved or not, moving direction, moving speed, moving amount, and the like.
The control means of this invention is a means for switching the power transmission mechanism between a power transmission engaging state in which the power of the electric motor is transmitted to the spool and the power transmission disengaging state in which the power transmission is cancelled. Specifically, in a structure that the power transmission mechanism is switched between the power transmission engaging state and the power transmission disengaging state according to the rotational behavior of the electric motor, the control means may control the electric motor. Alternatively, in a structure that the power transmission mechanism is switched between the power transmission engaging state and the power transmission disengaging state by the control of the power transmission mechanism itself, the control means controls the power transmission mechanism. The control means is typically composed of a CPU (central processing unit), an input/output unit, a storage unit, a peripheral unit, and the like.
In the present invention, it is determined, based on information about behavior of the spool-side member detected by the detection sensor, that the seat belt storing operation is needed, the control means controls the seat belt retractor to be in the power transmission engaging state so as to perform the seat belt winding-up action. Accordingly, the seat belt storing operation is achieved.

According to the structure of the seat belt retractor as claimed in claim 1, the information about behavior of the spool-side member detected by the detection sensor is used for activation of the seat belt storing operation, thereby increasing the reliability about the seat belt storing action. That is, in the seat belt retractor of the present invention which can be switched between the power transmission engaging state and the power transmission disengaging state, the unwinding state of the seat belt can be precisely known by detecting directly the behavior of the spool-side member closely related to the unwinding state of the seat belt regardless of the state selected by switching. This enables to remove troubles such as a trouble in which the seat belt is not stored and kept unwound even when the seat belt is needed to be stored and a trouble in which the seat belt storing action is started even when the seat belt is worn by the occupant and the seat belt storing action is therefore not needed.

The second invention of the present invention for achieving the aforementioned object is a seat belt retractor claimed in claim 2.
In the seat belt retractor claimed in claim 2, when it is detected, based on the information about behavior of the spool-side member detected by the detection sensor, that the seat belt is kept unwound under at least one of conditions such as after the wear of the seat belt is released, after the operation of wearing the seat belt is halted, and when a vehicle occupant gets off the vehicle, the control means as described in claim 1 determines that the seat belt storing operation is needed. Specifically, when at least one of the first through third conditions, i.e. the first condition where the behavior of the spool-side member is not stopped after the seat belt release operation is conducted, the second condition where the behavior of the spool-side member is stopped after the spool-side member acts a predetermined amount in a state that the wear of the seat belt is released and the motor is stopped, and the third condition where the behavior of the spool-side member is stopped after the operation of opening a vehicle door is conducted, is satisfied, it is determined that the seat belt storing operation is needed.
According to the structure mentioned above, it is possible to sensitively set the starting conditions for the seat belt storing operation.

The third invention of the present invention for achieving the aforementioned object is a seat belt retractor claimed in claim 3.
In the seat belt retractor claimed in claim 3, the detection sensor as claimed in claim 1 or claim 2 is adapted to detect information about rotational behavior of the spool as the spool-side member. The "information about rotational behavior" used here may be one or more suitably selected from condition of the spool whether it is rotated or not, rotational angle, rotational direction, rotational speed, rotational amount, and the like. In this case, when at least one of the first through third conditions, i.e. the first condition where the spool is not rotated after the seat belt release operation is conducted, the second condition where the rotation of the spool is stopped after the spool rotates a predetermined amount in a state that the wear of the seat belt is released and the motor is stopped, and the third condition where the rotation of the spool is stopped after the operation of opening a vehicle door is conducted, is satisfied, it is determined that the seat belt storing operation is needed.
The structure, in which the information about rotational behavior of the spool itself is detected by the detection sensor, enables the easy detection of information about behavior of the spool-side member.

The fourth invention of the present invention for achieving the aforementioned object is a seat belt apparatus as claimed in claim 4.
The seat belt apparatus claimed in claim 4 comprises at least a seat belt, a seat belt buckle, a buckle switch, a spool, an electric motor, a power transmission mechanism, a detection sensor, and a control means.
The seat belt of the present invention is a long belt to be worn by a vehicle occupant seated in a seat and is sometimes called "webbing". Typically, the vehicle occupant seated in the vehicle seat is restrained by the seat belt when restraint is required such as a vehicle collision, thereby ensuring the protection of the vehicle occupant.
The buckle switch of the present invention is a buckle switch which is capable of detecting information about the connecting state of the seat belt relative to the seat belt buckle. Detection cases of the "information about the connecting state of the seat belt" are as follows. When the seat belt is in the state connected to the seat belt buckle, the buckle switch is in the ON state so that it is detected that the seat belt is worn or used. When the seat belt is in the state released from the seat belt buckle, the buckle switch is in the OFF state so that it is detected that the seat belt is not worn or not used. When the seat belt is connected to the seat belt buckle so as to turn ON the buckle switch, it is detected that the seat belt is switched to the connecting state. When the seat belt is released from the seat belt buckle so as to turn OFF the buckle switch, it is detected that the seat belt is switched to the release state.
The spool, the electric motor, the power transmission mechanism, the detection sensor, and the control means of this invention have substantially the same structures as the spool, the electric motor, the power transmission mechanism, the detection sensor, and the control means described in claim 1. Especially, the control means of this invention controls the seat belt retractor to be in the power transmission engaging state to perform the seat belt winding action when the control means determines, based on the information about behavior of the spool-side member detected by the detection sensor and information about the connecting state of the seat belt detected by the buckle switch, that the seat belt storing operation is needed.

According to the structure of the seat belt apparatus as claimed in claim 4, the information about behavior of the spool-side member detected by the detection sensor and the information about the connecting state of the seat belt detected by the buckle switch are used for activation of the seat belt storing operation, thereby increasing the reliability about the seat belt storing action. This enables to remove troubles such as a trouble in which the seat belt is not stored and kept unwound even when the seat belt is needed to be stored and a trouble in which the seat belt storing action is started even when the seat belt is worn by the occupant and the seat belt storing action is therefore not needed.

The fifth invention of the present invention for achieving the aforementioned object is a seat belt apparatus claimed in claim 5.
In the seat belt apparatus claimed in claim 5, when it is detected, based on the information about behavior of the spool-side member detected by the detection sensor and the information about the connecting state of the seat belt detected by the buckle switch, that the seat belt is kept unwound under at least one of conditions such as after the wear of the seat belt is released, after the operation of wearing the seat belt is halted, and when a vehicle occupant gets off the vehicle, the control means as described in claim 4 determines that the seat belt storing operation is needed.
According to the structure mentioned above, it is possible to sensitively set the starting conditions for the seat belt storing operation.

The sixth invention of the present invention for achieving the aforementioned object is a seat belt apparatus claimed in claim 6.
In the seat belt apparatus claimed in claim 6, the detection sensor as claimed in claim 4 or claim 5 is adapted to detect information about rotational behavior of the spool as the spool-side member. Specifically, when at least one of the first through third conditions, i.e. the first condition where the spool is not rotated after the seat belt release operation is conducted, the second condition where the rotation of the spool is stopped after the spool rotates a predetermined amount in a state that the wear of the seat belt is released and the motor is stopped, and the third condition where the rotation of the spool is stopped after the operation of opening a vehicle door is conducted, is satisfied, it is determined that the seat belt storing operation is needed.
The structure, in which the information about rotational behavior of the spool itself is detected by the detection sensor, enables the easy detection of information about behavior of the spool-side member.

The seventh invention of the present invention for achieving the aforementioned object is a vehicle with a seat belt apparatus claimed in claim 7.
The vehicle with a seat belt apparatus claimed in claim 7 is a vehicle in which the seat belt apparatus as claimed in any one of claims 4 through 6 is accommodated in an accommodating space in a vehicle such as an accommodating space in a pillar, an accommodating space in a seat, or an accommodating space in another part of the vehicle. This structure enables to provide a vehicle in which a seat belt apparatus having increased reliability relating to the seat belt storing operation of the seat belt retractor is accommodated in an accommodating space in the vehicle.

As described in the above, the present invention can provide a technology which is effective in increasing the reliability relating to the seat belt storing operation by employing a structure of a seat belt retractor in which when a control means determines, based on information about behavior of a spool-side member detected by a detection sensor, that the seat belt storing operation is needed, the control means controls the seat belt retractor to be in power transmission engaging state so as to perform the seat belt winding-up action.

Hereinafter, embodiments of the present invention will be described in detail with reference to drawings. First, description will be made as regard to an embodiment of the present invention with reference to Fig. 1 through Fig. 4.
Fig. 1 is an illustration showing the structure of a seat belt apparatus 100 as an embodiment of "the seat belt apparatus" according to the present invention;
Fig. 2 is an illustration showing the peripheral structure of a seat belt retractor 1 shown in Fig. 1;
Fig. 3 is an exploded perspective view of a seat belt retractor 1 as an embodiment of "the seat belt retractor" according to the present invention;
Figs. 4(a) and 4(b) show the seat belt retractor 1 of the embodiment shown in Fig. 3 without a retainer cover, wherein Fig. 4(a) is a perspective view thereof and Fig. 4(b) is a left side view thereof;
Figs. 5(a) and 5(b) show a sun gear member used in the seat belt retractor 1 of the embodiment shown in Fig. 3, wherein Fig. 5(a) is a perspective view thereof and Fig. 5(b) is a perspective view thereof as seen from a direction of IIIB in Fig. 5(a);
Fig. 6 is a left side view showing a state of power transmission disconnection mode of the seat belt retractor 1 of the embodiment shown in Fig. 3 without showing some components;
Fig. 7 is a left side view showing a state of low reduction ratio power transmission mode of the seat belt retractor 1 of the embodiment shown in Fig. 3 without showing some components;
Fig. 8 is a left side view showing a state of high reduction ratio power transmission mode of the seat belt retractor 1 of the embodiment shown in Fig. 3 without showing some components; and
Fig. 9 is a flow chart showing a clutch release process in the seat belt retractor 1 of the embodiment.
In the following description, unless stated, "left" and "right" are "left" and "right" in the drawing used for the explanation and "clockwise" and "counterclockwise" are "clockwise" and "counterclockwise" in the drawing used for the explanation.

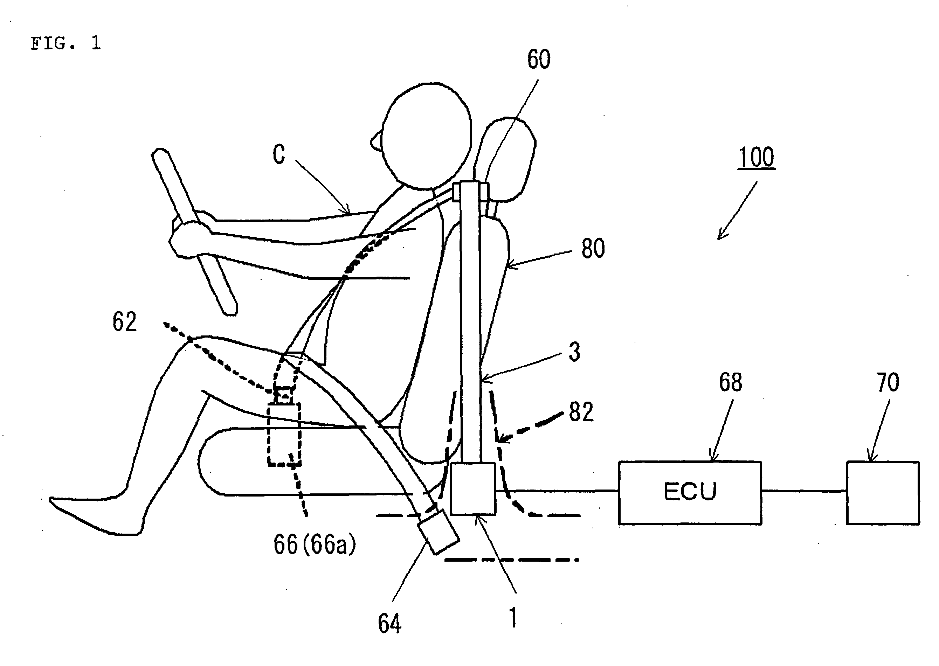

As shown in Fig. 1, the seat belt apparatus 100 of this embodiment is a seat belt apparatus for a vehicle to be installed in an automotive vehicle as "a vehicle with a seat belt apparatus" of the present invention and mainly includes a seat belt retractor 1, a seat belt 3, and an ECU 68. In addition, an input element 70 is installed in the vehicle to detect information about collision prediction or collision occurrence of the vehicle, information about the driving state of the vehicle, information about the sitting position and the body size of a vehicle occupant seated in a vehicle seat, information about traffic conditions around the vehicle, information about weather condition and about time zone, and the like and to input such detected information to the ECU 68. The detected information of the input element 70 is transmitted to the ECU 68 anytime or at predetermined intervals and is used for the operation control of the seat belt apparatus 100 and the like.

The seat belt 3 is a long belt (webbing) to be used for restraining a vehicle occupant C seated in a vehicle seat 80 as a driver's seat (corresponding to the "seat" of the present invention). The seat belt 3 corresponds to the "seat belt" of the present invention. The seat belt 3 is withdrawn from the seat belt retractor 1 fixed to the vehicle and extends through a deflection fitting 60 provided around an area about the shoulder of the vehicle occupant C and is connected to an outer anchor 64 through a tongue 62. The deflection fitting 60 has a function of holding the seat belt 3 to the area about the shoulder of the occupant C and guiding the seat belt 3. By inserting the tongue 62 to a buckle 66 fixed to the vehicle body, the seat belt 3 becomes into the state worn by the vehicle occupant C. The buckle 66 has a built-in buckle switch 66a. The buckle switch 66a detects that the tongue 62 is inserted into the buckle 66 (actually, detects that the seat belt becomes into the worn state).

The seat belt retractor 1 is a device capable of performing the action of winding or unwinding the seat belt 3 by a spool 4 as will be described later and corresponds to the "seat belt retractor" of the present invention. The retractor 1 is installed in an accommodating space in a B-pillar 82 of the vehicle in the embodiment shown in Fig. 1.

The ECU 68 has a function of conducting the control of the seat belt retractor 1 and other operational mechanisms based on the input signals from the input element 70 and comprises a CPU (Central processing unit), an input/output unit, a storage unit, a peripheral unit, and the like. Particularly in this embodiment, the ECU 68 controls a motor 6, as will be described later, of the seat belt retractor 1. Specifically, the ECU 68 controls the amount of current supplied to an electromagnetic coil of the motor 6 and the direction of the current supply so as to vary the rotational speed or the rotational direction of a shaft of the motor 6. The ECU 68 is structured as a means for controlling the motor 6 and switching the state between the power transmission engaging state where the power of the motor 6 is transmitted to the spool 4 and the power transmission disengaging state where the power transmission is cancelled and corresponds to the "control means" of the present invention.

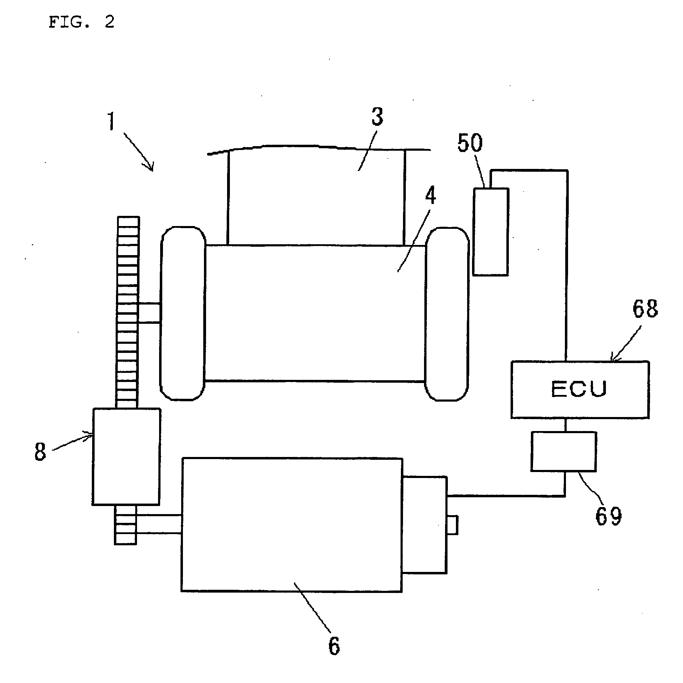

As shown in Fig. 2, the seat belt retractor 1 has a detection sensor 50 for directly detecting information about the rotation of the spool 4. The detection sensor 50 is a sensor for detecting the rotation information about the rotation of the spool 4 and corresponds to the "detection sensor" of the present invention. In this embodiment, based on the information detected by the detection sensor 50, the ECU 68 controls the motor 6. As the information detected by the detection sensor 50, condition of the spool 4 whether it is rotated or not, rotational angle, rotational direction, rotational speed, rotational amount or the like may be suitably used. As the detection sensor 50, a Hall sensor, a volume sensor, a photo interrupter, or the like may be suitably used.
The drive of the motor 6 of this embodiment is adapted to be controlled by the ECU 68 based on the motor current value detected by a motor current detector 69.

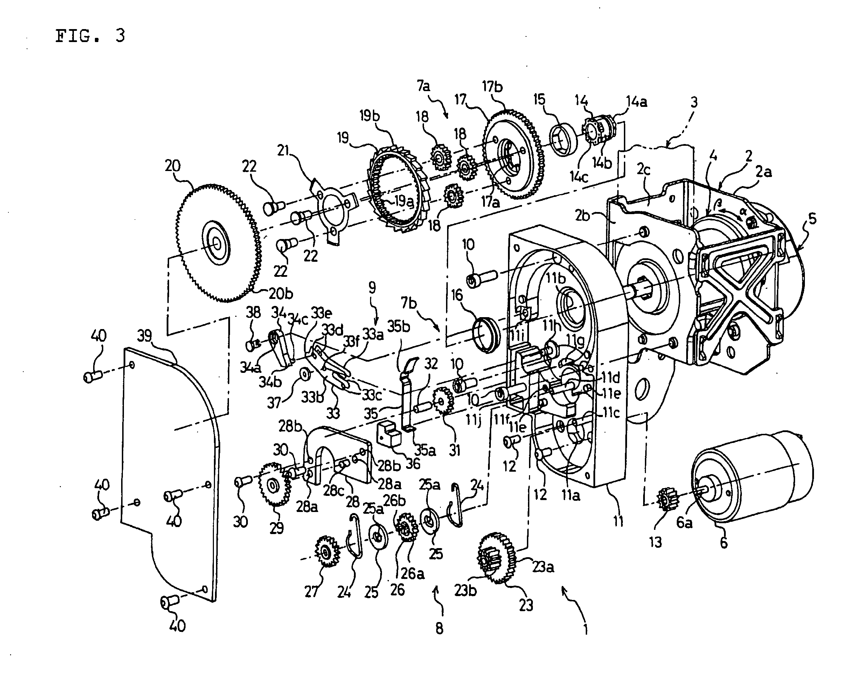

Hereinafter, detailed structure of the seat belt retractor 1 of this embodiment will be described.
As shown in Fig. 3, the seat belt retractor 1 of this embodiment generally comprises a frame 2, a seat belt 3 restraining the occupant when required, a spool 4 for winding up the seat belt 3, a locking means 5 which is attached to one side of the frame 2 for preventing the spool 4 from rotating in the belt withdrawing direction α when large deceleration exceeding a predetermined deceleration value is generated such as in the event of vehicle collision, a motor 6 for generating rotational torque to be applied to the spool 4, a power transmission mechanism 8, and a power transmission mode switching mechanism 9. The power transmission mechanism 8 has a high-ratio speed reduction mechanism 7a for transmitting the rotation of the motor 6 to the spool 4 after reducing the speed of the rotation at a relatively high speed reduction ratio and a low-ratio speed reduction mechanism 7b for transmitting the rotation of the motor 6 to the spool 4 after reducing the speed of the rotation at a relatively low speed reduction ratio. In the power transmission mechanism 8, a first power transmission path and a second power transmission path are set so that the power transmission mechanism 8 transmits the rotational torque of the motor 6 to the spool 4 selectively through either the first power transmission path or the second power transmission path. The power transmission mode switching mechanism 9 sets the power transmission mechanism 8 selectively into either the first power transmission path or the second power transmission path. The power transmission mechanism 8 and the power transmission mode switching mechanism 9 compose together a mechanism for allowing the winding action and the unwinding action of the spool 4 by transmitting the power of the motor 6 to the spool 4 and correspond to the "power transmission mechanism" of the present invention.

The frame 2 comprises a pair of parallel side walls 2a, 2b and a back plate 2c connecting the side walls 2a and 2b. Between the side walls 2a and 2b of the frame 2, the spool 4 for winding up the seat belt 3 is rotatably arranged. The spool 4 may be a conventionally well known spool for seat belt retractors. The spool 4 is adapted as a member for operating the winding and the unwinding of the seat belt and corresponds to the "spool" or the "spool-side member" of the present invention. In this embodiment, the seat belt 3 as a member which acts according to the winding operation or the unwinding operation of the spool 4 corresponds to the "spool-side member" of the present invention.

The locking means 5 is attached to the side walls 2a. The locking means 5 may be a conventionally well known locking means for seat belt retractors. That is, the locking means 5 is activated to prevent the spool 4 from rotating in the withdrawing direction α when a vehicle sensor (a deceleration sensor) detects a large deceleration exceeding a predetermined deceleration value applied to the vehicle or when a webbing sensor (belt withdrawing speed sensor) detects a withdrawing speed exceeding a predetermined speed of the seat belt 3.

Between the spool 4 and the locking means 5, a force limiter mechanism (an energy absorbing mechanism: hereinafter, referred to as "EA mechanism") (not shown), which is conventionally well known in the art, for limiting the load on the seat belt 3 when the withdrawal of the seat belt 3 is prevented by the actuation of the locking means 5 is arranged. The EA mechanism may be composed, for example, of a conventionally well known torsion bar. In this case, when the withdrawal of the seat belt 3 is prevented by the actuation of the locking means 5, the torsion bar is twisted and deformed so as to limit the load on the seat belt 3, thereby absorbing impact energy.

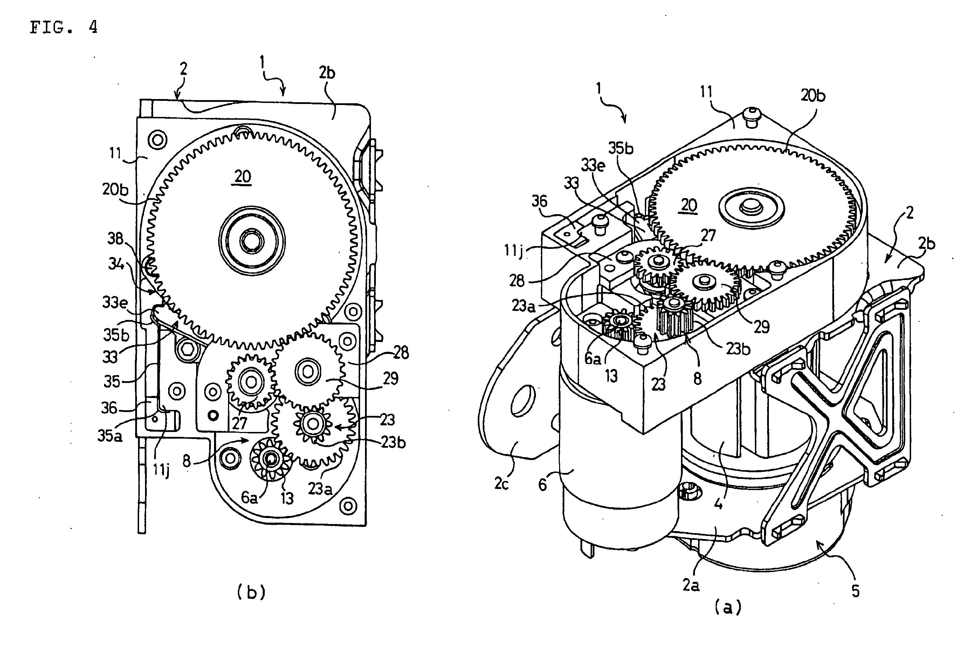

As shown in Fig. 3 and Fig. 4(a), a retainer 11 is mounted to the side wall 2b of the frame 2 by three screws 10 and the motor 6 is attached to the retainer 11 by a pair of screws 12 at a side on which the frame 2 is mounted. A motor rotary shaft 6a of the motor 6 extends through a through hole 11 a of the retainer 11. A motor gear 13 having external teeth is attached to the motor rotary shaft 6a projecting on the side opposite to the frame 2 side of the retainer 11 such that the motor gear 13 can rotate together with the motor rotary shaft 6a. The motor 6 is adapted as an electrically-operated motor and corresponds to the "electric motor" of the present invention.

As shown in Fig. 3, between both the spool 4 and the aforementioned EA mechanism (for example, the torsion bar) and the speed reduction mechanisms 7a, 7b, a connector 14 for connecting these in the rotational direction. The connector 14 comprises a first rotational connecting portion 14a for connecting with both the spool 4 and the EA mechanism in the rotational direction, a second rotational connecting portion 14b for connecting with a connector-side bearing 15 in the rotational direction, and a third rotational connecting portion 14c which is formed with splines for connecting with the speed reduction mechanisms 7a, 7b in the rotational direction.

The first rotational connecting portion 14a is formed into a polygonal cylindrical shape, but not clearly shown in Fig. 3. The outer periphery of the first rotational connecting portion 14a is connected to the spool 4 such that the first rotational connecting portion 14a can rotate together with the spool 4, while the inner periphery of the second rotational connecting portion 14a is connected to the EA mechanism (for example, the torsion bar) such that the first rotational connecting portion 14a can rotate together with the EA mechanism (since the structure connecting the connector 14 with the spool 4 and the EA mechanism to rotate together is conventionally well known, the detailed description will be omitted.).

The outer periphery of the second rotational connecting portion 14b is formed to have a polygonal section, while the inner periphery of the connector-side bearing 15 is formed to have a same polygonal section. The connector-side bearing 15 is fitted around the second rotational connecting portion 14b, whereby the connector-side bearing 15 is attached to the connector 14 not to allow the relative rotation therebetween. A retainer-side bearing 16 is attached to an aperture 11b of the retainer 11 not to allow the relative rotation therebetween. The connector-side bearing 15 is supported in the retainer-side bearing 16 to allow the relative rotation, whereby the connector 14 is rotatably supported by the retainer 11.
The third rotational connecting portion 14c has a predetermined number of engaging grooves, such as splines, which extend in the axial direction and which are formed at equal intervals in the circumferential direction.

The high-ratio speed reduction mechanism 7a comprises an annular carrier gear 17, a predetermined number (three in the illustrative embodiment) of planet gears 18 which are rotatably attached to the carrier gear 17, a circular ring member 19, and a sun gear member 20.
The inner periphery 17a of the carrier gear 17 has a predetermined number of engaging grooves, such as splines, which extend in the axial direction and which are formed in a connector 14 side portion of the inner periphery 17a at equal interval in the circumferential direction. The engaging grooves of the inner periphery 17a are fitted to convexes between the engaging grooves of the third rotational connecting portion 14c of the connector 14 and convexes between the engaging grooves of the inner periphery 17a are fitted to the engaging grooves of the third rotational connecting portion 14c of the connector 14 (just like spline engagement), whereby the carrier gear 17 is connected to the connector 14 not to allow the relative rotation therebetween, i.e., to rotate together with the connector 14. The carrier gear 17 has external teeth 17b formed in the outer periphery of the carrier gear 17.

The planet gears 18 are rotatably attached to the carrier gear 17 via a speed reduction plate 21 by speed reduction pins 22.
The ring member 19 comprises an internal gear 19a formed on the inner periphery thereof and ratchet teeth 19b formed on the outer periphery thereof so that the internal gear 19a and the ratchet teeth 19b rotate together with each other.

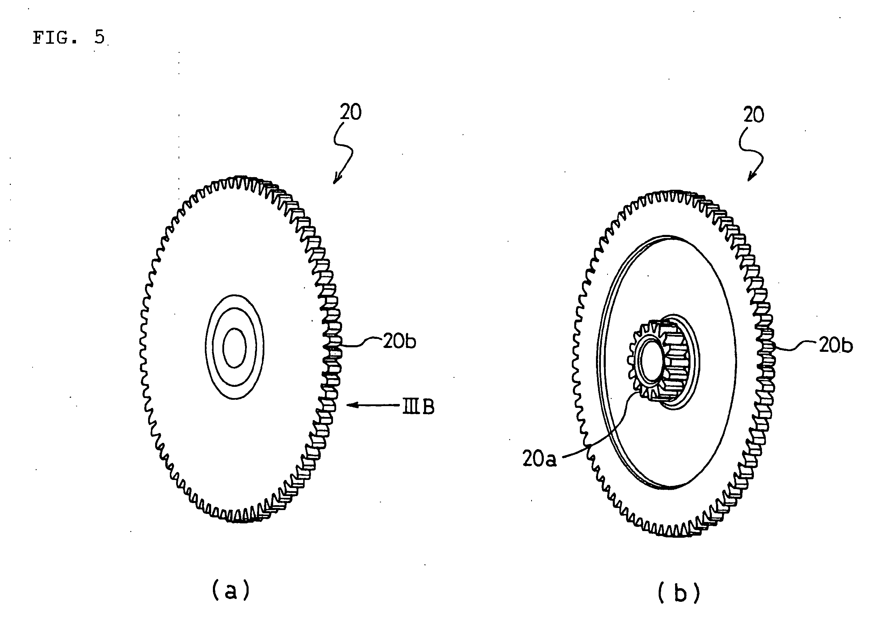

As shown in Figs. 5(a) and 5(b), the sun gear member 20 comprises a sun gear 20a, composed of small-diameter external teeth, and large-diameter external teeth 20b so that the sun gear 20a and the external teeth 20b rotate together with each other.
The planet gears 18 supported by the carrier gear 17 always mesh with both the sun gear 20a and the internal gear 19a, thereby composing a planetary gear mechanism. Therefore, the speed reduction mechanism 7 is adapted as a planetary gear mechanism of which the input is the sun gear 20a and the output is the carrier gear 17.

As shown in Fig. 3, the power transmission mechanism 8 further comprises a connecting gear 23, a pair of clutch springs 24, a pair of pulleys 25, a lower-side connecting gear 26 having external teeth, an upper-side connecting gear 27 having external teeth, a guide plate 28, and an idle gear 29 having external teeth.
The connecting gear 23 is rotatably supported by a rotary shaft 11c projecting from the retainer 11 and comprises a first connecting gear 23a, composed of large-diameter external teeth, and a second connecting gear 23b, composed of small-diameter external teeth so that the first and second connecting gears 23a, 23b rotate together with each other. In this regard, as shown in Figs. 4(a) and 4(b), the large-diameter first connecting gear 23a always meshes with the motor gear 13.

As shown in Fig. 3, the lower-side connecting gear 26 has rotary shafts 26a which are formed to project from the both side surfaces thereof (only one of the rotary shafts 26a is shown in Fig. 3) and a through hole 26b which is formed to axially extend through the rotary shafts 26a. Each rotary shaft 26a has a flat portion so that an elongate hole 25a of each pulley 25 is fitted to the rotary shaft, whereby the elongate hole 25a partially extends along the face of the flat portion. Therefore, the pulleys 25 are supported on the both side surfaces of the lower-side connecting gear 26, respectively, so that the pulleys 25 rotate together with the lower-side connecting gear 26.
The clutch springs 24 each have a first curved engaging portion 24a which is engaged with each pulley 25. Further, the upper-side connecting gear 27 is supported on one rotary shaft 26a of the lower-side connecting gear 26 such that the upper-side connecting gear 27 rotates together with the lower-side connecting gear 26.
The respective pulleys 25, the lower-side connecting gear 26, and the upper-side connecting gear 27 are rotatably supported by the rotary shaft 11d projecting from the retainer 11.

A pair of screws 30 are inserted into corresponding holes 28b of a guide plate 28 and are screwed into a pair of threaded holes 11f formed in the retainer 11 in a state that holes 28a of the guide plate 28 are fitted to and held by a pair of supporting shafts 11e projecting from the retainer 11, whereby the guide plate 28 is attached to the retainer 11. The idle gear 29 is rotatably supported on a rotary shaft 28c projecting from the guide plate 28.
As shown in Figs. 4(a) and 4(b), the idle gear 29 always mesh with all the external teeth 20b of the sun gear member 20, the small-diameter second connecting gear 23b of the connecting gear 23, and the upper-side connecting gear 27.

The low-ratio speed reduction mechanism 7b comprises the upper-side connecting gear 27, the lower-side connecting gear 26, a clutch gear 31, and the carrier gear 17.
Therefore, the rotational torque of the motor 6 transmitted to the idle gear 29 is transmitted from the idle gear 29 to the spool 4 via the low-ratio speed reduction mechanism 7b or via the high-ratio speed reduction mechanism 7a.

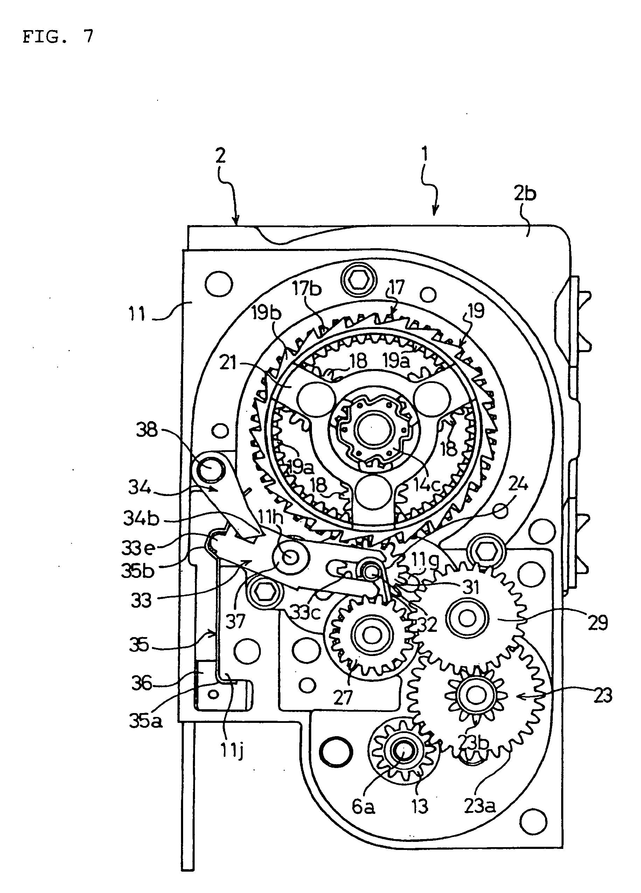

As shown in Fig. 3, the power transmission mode switching mechanism 9 comprises the clutch gear 31 having external teeth, a rotary shaft 32, a clutch arm 33, a clutch pawl 34, a resistance spring 35, and a spring stopper 36.
As shown in Fig. 7, the clutch gear 31 can mesh with the external teeth 17b of the carrier gear 17 of which diameter is larger than that of the clutch gear 31 and always meshes with the lower-side connecting gear 26 (not shown). The rotary shaft 32 extends through a central hole 31a of the clutch gear 31 to rotatably support the clutch gear 31.

The clutch arm 33 is formed into a U shape in section, composed of side walls 33a, 33b and a bottom (not shown). At one end side, the both side walls 33a, 33b have projecting portions from the bottom and linear supporting grooves 33c which are formed in the projecting portions, respectively. The clutch gear 31 is disposed between the projecting portions of the side walls 33a and 33b so that the rotary shaft 32 projecting from the both sides of the clutch gear 31 is supported by the corresponding supporting grooves 33c in such a manner as to allow movement of the rotary shaft 32 along the supporting grooves 33c. Further, second curved engaging portions 24b of the clutch springs 24 are hooked onto the portions of the rotary shaft 32 projecting from the side walls 33a, 33b, respectively. One end of the rotary shaft 32 is fitted to and supported by a guide slot 11g formed in the retainer 11. The guide slot 11g is formed into a circular arc about the rotary shaft 11d. Therefore, the rotary shaft 32 is movable along a circumference of a circle about the rotary shaft 11d because the rotary shaft 32 is guided by the guide slot 11g.

At the other end side, the side walls 33a and 33b are provided with slots 33d and substantially circular engaging portions 33e, respectively. At the middle in the longitudinal direction, the side walls 33a, 33b are further provided with supporting holes 33f, respectively. The supporting holes 33f are fitted with a supporting shaft 11h projecting form the retainer 11, whereby the clutch arm 33 is pivotably supported. An E-ring 37 is attached to the supporting shaft 11h, thereby preventing the clutch arm 33 from coming off.

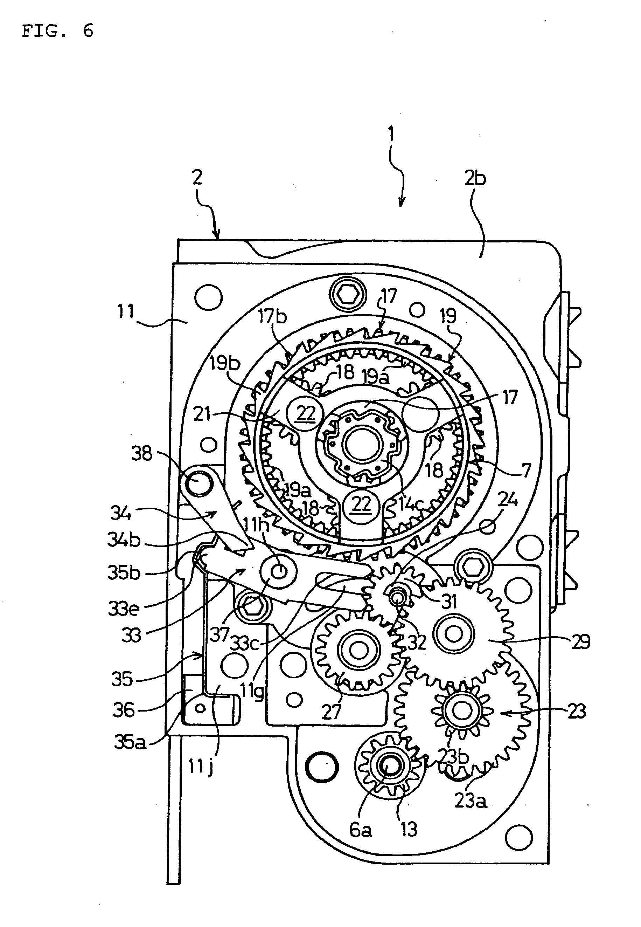

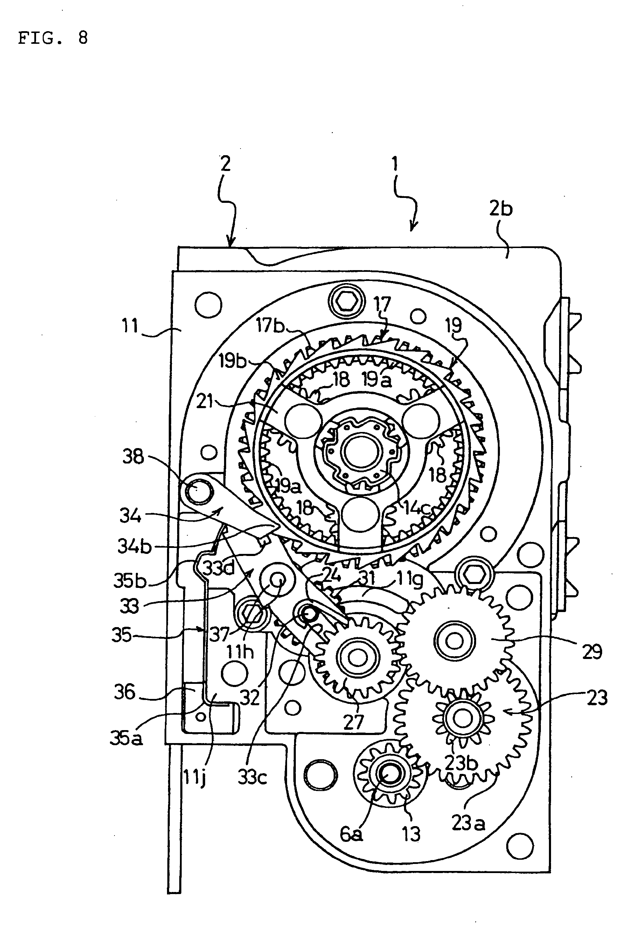

The clutch pawl 34 is provided, at its one end, with a supporting hole 34a and at its other end, with an engaging pawl 34b. Furthermore, the other end of the clutch pawl 34, i.e., the engaging pawl 34b side, includes a connecting pin 34c projecting therefrom. The connecting pin 34c is fitted in the slots 33d of the clutch arm 33 to allow the movement of the connecting pin 34c relative to the clutch arm 33 along the slots 33d. As shown in Fig. 6, a pawl pin 38 extends through the supporting hole 34a and is inserted into and connected with a pin hole 11i formed in the retainer 11, whereby the clutch pawl 34 is pivotally mounted to the retainer 11. As shown in Fig. 8, the engaging pawl 34b can engage ratchet teeth 19b when the ring member 19 rotates in the clockwise direction (corresponding to the belt-withdrawing direction α of the spool 4). When the engaging pawl 34b engages one of the ratchet teeth 19b, the rotation of the ring member 19 in the clockwise direction is stopped.

The resistance spring 35 is composed of a band-like plate spring, and has a lower end formed in an L-like shape as a supporting portion 35a and a recess 35b formed in a U-like shape at a middle-upper portion in the longitudinal direction. A portion between the recess 35b and the supporting portion 35a is flat and a portion between the recess 35b and the upper end is curved.
The recess 35b can receive the engaging portion 33e of the clutch arm 33. As shown in Fig. 6, in a state that the engaging portion 33e is received by the recess 35b, the supporting grooves 33c extend in a tangential direction relative to the arc of the guide slot 11g so that the rotary shaft 32 can move from the guide slot 11g to the supporting grooves 33c or from the supporting grooves 33c to the guide slot 11g.

The spring stopper 36 is formed in an L-like shape and the supporting portion 35a is held between the spring stopper 36 and a spring mounting portion 11j formed on the retainer 11, whereby the resistance spring 35 is mounted to the retainer 11 in a cantilever-like manner with the upper end as a free end.
The respective components of the speed reducing mechanism 7, the power transmission mechanism 8 and the power transmission mode switching mechanism 9 are mounted within recesses formed in the face of the retainer 11 opposite to the face for mounting the frame 2, and a retainer cover 39 is attached to the retainer 11 on this face side with a predetermined number (four in the drawings) of screws 40 to cover the components.

The power transmission mechanism 8 having the aforementioned structure has the following three power transmission modes. The three power transmission modes will now be described with reference to Fig. 6 through Fig. 8. Fig. 6 is a left side view showing a state of power transmission disconnection mode of the seat belt retractor of the embodiment shown in Fig. 3 without showing some components. Fig. 7 is a left side view showing a state of low reduction ratio power transmission mode of the seat belt retractor of the embodiment shown in Fig. 3 without showing some components. Fig. 8 is a left side view showing a state of high reduction ratio power transmission mode of the seat belt retractor of the embodiment shown in Fig. 3 without showing some components.

### (1) Power Transmission disconnection mode (Free mode)

As shown in Fig. 6, in the power transmission disconnection mode, the engaging portion 33e of the clutch arm 33 for the power transmission mode switching mechanism 9 is received by the recess 35b of the resistance spring 35. In the state that the engaging portion 33e is received by the recess 35b, the engaging pawl 34b of the clutch pawl 34 does not engage the ratchet teeth 19b of the ring member 19 so as to allow free rotation of the ring member 19. Accordingly, the torque transmission path (low speed and high torque transmission path as will be described later) between the sun gear member 20 and the carrier gear 17 is disconnected. The power transmission disconnection mode is defined as a state that the power transmission engaging state allowing power transmission from the motor 6 to the spool 4 is canceled and corresponds to the "power transmission disengaging state" of the present invention.

On the other hand, the rotary shaft 32 is in contact with the right end of the guide slot 11g so as to set the clutch gear 31 to the rightmost position. At the rightmost position, the clutch gear 31 is spaced away from the external teeth 17b of the carrier gear 17. Accordingly, the torque transmission path (high-speed and low-torque transmission path as will be described later) between the clutch gear 31 and the carrier gear 17is disconnected.
As a result, in the power transmission disconnection mode, the spool 4 and the motor 6 are not connected so that the rotational torque of the motor 6 is not transmitted to the spool 4 and the rotational torque of the spool 4 is also not transmitted to the motor 6.

### (2) Low Reduction Ratio Power Transmission Mode

As shown in Fig. 7, in the low reduction ratio power transmission mode, the engaging portion 33e of the clutch arm 33 is received by the recess 35b of the resistance spring 35 similarly to the power transmission disconnection mode. In the state that the engaging portion 33e is received by the recess 35b, the engaging pawl 34b of the clutch pawl 34 does not engages the ratchet teeth 19b of the ring member 19 so as to allow free rotation of the ring member 19. Accordingly, the low speed and high torque transmission path between the sun gear member 20 and the carrier gear 17 is disconnected.

On the other hand, the rotary shaft 32 is set at the uppermost position (closest to the rotary shaft of the spool 4) at the middle portion of the guide slot 11g so as to set the clutch gear 31 to the uppermost position (closest to the rotating shaft of the spool 4). At the uppermost position, the clutch gear 31 meshes with the external teeth 17b of the carrier gear 17. Accordingly, the high-speed and low-torque transmission path between the clutch gear 31 and the carrier gear 17 is connected. That is, the motor 6 is connected to the spool 4 through the motor gear 13, the connecting gear 23, the idle gear 29, the upper-side connecting gear 27, the lower-side connecting gear 26, the clutch gear 31, the carrier gear 17, and the connector 14. Therefore, the low reduction ratio power transmission path is set. The rotary shaft 32 at the uppermost position is inserted into the supporting grooves 33c of the clutch arm 33 so as to come in contact with the clutch arm 33.
As described above, the low reduction ratio power transmission mode is a power transmission mode for power transmission with a low reduction ratio and in which the high-speed and low-torque transmission path is set. In the low reduction ratio power transmission mode, it is possible to quickly retract the seatbelt by the motor 6. The low reduction ratio power transmission mode and the high reduction ratio power transmission mode as will be described later are defined as a state allowing the transmission of the power of the motor 6 to the spool 4 and corresponds to the "power transmission engaging state" of the present invention.

### (3) High Reduction Ratio Power Transmission Mode

As shown in Fig. 8, in the high reduction ratio power transmission mode, the engaging portion 33e of the clutch arm 33 disengages from the recess 35b of the resistance spring 35 and is set at the curve portion of the resistance spring 35 on the upper side of the recess 35b. In the state that the engaging portion 33e disengages from the recess 35b, the engaging pawl 34b of the clutch pawl 34 engages one of the ratchet teeth 19b of the ring member 19 so as to stop the ring member 19 from rotation in the clockwise direction. Accordingly, the low speed and high torque transmission path between the sun gear member 20 and the carrier gear 17 is connected. That is, the motor 6 is connected to the spool 4 through the motor gear 13, the connecting gear 23, the idle gear 29, the external teeth 20b of the sun gear member 20, the sun gear 20a, the planetary gears 18, the carrier gear 17, and the connector 14. As a result, the high reduction ratio power transmission path by the planetary gear mechanism is set.

On the other had, the rotary shaft 32 is in contact with the left end of the guide slot 11g so as to set the clutch gear 31 to the leftmost position. At the leftmost position, the clutch gear 31 disengages from the external teeth 17b of the carrier gear 17. Accordingly, the high speed and low torque transmission path between the clutch gear 31 and the carrier gear 17 is disconnected.
The high reduction ratio power transmission mode is a power transmission mode for the power transmission with a high reduction ratio and in which the low speed and high torque transmission path is set. In the high reduction ratio power transmission mode, the seatbelt is retracted with high tension by the motor 6.

The power transmission mode switching mechanism 9 conducts the power transmission mode switching among the power transmission disconnection mode, the low reduction ratio power transmission mode, and the high reduction ratio power transmission mode.

### (1) Switching From the Power Transmission Disconnection Mode to the Low Reduction Ratio Power Transmission Mode

As the motor 6 rotates in the normal direction (the motor rotary shaft 6a rotates in the clockwise direction in Fig. 6: corresponding to rotation of the spool 4 in the belt-winding direction (the direction β in Fig. 3)) in the power transmission disconnection mode shown in Fig. 6, the lower-side clutch gear 26 and the pulleys 25 are rotated in the respective directions corresponding to the belt-winding direction β of the spool 4 via the motor gear 13, the connecting gear 23, the idle gear 29, and the upper clutch gear 27. Then, the clutch gear 31 rotates freely because the clutch gear 31 does not mesh with the external teeth 17b of the carrier gear 17. In this state, the rotary shaft 32 is free from any resistance so that the clutch spring 24 rotates in the same direction as the pulleys 25. Accordingly, the clutch gear 31 and the rotary shaft 32 move to the left along the guide slot 11g so that the rotary shaft 32 comes in contact with the clutch arm 33 as shown in Fig. 7.

In the state that the rotary shaft 32 is in contact with the clutch arm 33, the clutch gear 31 and the rotary shaft 32 are set to the uppermost positions as shown in Fig. 7 and the clutch gear 31 meshes with the external teeth 17b of the carrier gear 17. Accordingly, rotation of the clutch gear 31 is transmitted to the carrier gear 17, whereby the carrier gear 17 is rotated. If the seat belt 3 has slack in this sate, the seat belt 3 is wound onto the spool 4 by the rotation of the carrier gear 17. As the slack is removed, the spool 4 no longer rotates so that the carrier gear 17 no longer rotates. Therefore, the clutch gear 31 receives resistance from the carrier gear 17 so that the clutch gear 31 also no longer rotates.

On the other hand, the lower-side connecting gear 26 is forced to rotate due to rotational torque of the motor 6. Because of the rotational torque of the lower-side connecting gear 26, force is applied to the rotary shaft 32 in a direction toward the leftmost position. Since the rotary shaft 32 is in contact with the clutch arm 33, the clutch arm 33 is pressed by the rotary shaft 32. Since, however, the seat belt 3 is tightened with tension less than a predetermined value, the moment for rotating the clutch arm 33 in the clockwise direction due to pressing force applied by the rotary shaft 32 is smaller than the moment for preventing rotation of the clutch arm 33 in the clockwise direction due to the engagement between the engaging portion 33e and the recess 35b. Accordingly, the engaging portion 33e does not come off the recess 35b, the clutch arm 33 does not pivot, and the rotary shaft 32 is stopped at the position where the rotary shaft 32 is in contact with the clutch arm 33.

Since the rotary shaft 32 is stopped, the clutch gear 31 and the rotary shaft 32 are held at the aforementioned uppermost positions as shown in Fig. 7. Since the clutch gear 31 is held at the uppermost position, the mesh between the clutch gear 31 and the external teeth 17b of the carrier gear 17 is maintained and connection of the high speed and low torque transmission path between the clutch gear 31 and the carrier gear 17 is maintained. Since the clutch arm 33 does not pivot, the clutch pawl 34 does not pivot, thereby holding the engaging pawl 34b at a position where the engaging pawl 34b does not engage the ratchet teeth 19b. As a result, the ring member 19 rotates freely, thereby maintaining the disconnection of the low speed and high torque transmission path between the sun gear member 20 and the carrier gear 17.
In this manner, the mode of the power transmission mechanism 8 is switched from the power transmission disconnection mode to the low reduction ratio power transmission mode, whereby the power transmission mechanism 8 is set to the low reduction ratio power transmission mode.

### (2) Switching From the Low Reduction Ratio Power Transmission Mode to the High Reduction Ratio Power Transmission Mode

The high reduction ratio power transmission mode is set by relatively high rotational torque of the motor 6. In this case, the power transmission mode is switched from the power transmission disconnection mode to the high reduction ratio power transmission mode through the low reduction ratio power transmission mode.
Switching from the power transmission disconnection mode to the low reduction ratio power transmission mode is performed in the same way as described above. However, when the mode is set to the high reduction ratio power transmission mode, the tension of the seat belt 3 is greater than the predetermined value. Accordingly, in the state of the low reduction ratio power transmission mode shown in Fig. 7, the moment applied to the clutch arm 33 due to the pressing force from the rotary shaft 32 is greater than the moment for preventing rotation of the clutch arm 33 in the clockwise direction due to engagement between the engaging portion 33e and the recess 35b. As a result, the engaging portion 33e can come off the recess 35b.

When the clutch springs 24 further rotate in the counterclockwise direction, the rotary shaft 32 moves toward the left along the guide slot 11g while rotating the clutch arm 33 in the clockwise direction about the supporting shaft 11h. Accordingly, the clutch gear 31 also further moves toward the left. As the rotary shaft 32 comes in contact with the left end of the guide slot 11 g, further movement of the rotary shaft 32 is prevented so that the clutch gear 31, the rotary shaft 32, and the clutch springs 24 are stopped. Accordingly, as shown in Fig. 8, the clutch gear 31 and the rotary shaft 32 are set to the leftmost positions. At the leftmost positions, the clutch gear 31 comes off the external teeth 17b of the carrier gear 17 and the high speed and low torque transmission path between the clutch gear 31 and the carrier gear 17 is thus disconnected.

On the other hand, the clutch pawl 34 pivots about the clutch pawl pin 38 in the counter-clockwise direction along with the rotation of the clutch arm 33, and the engaging pawl 34b is set to a position capable of engaging the ratchet teeth 19b as shown in Fig. 8. Since the sun gear member 20 rotates by rotational torque of the motor 6 and the ring member 19 rotates in the clockwise direction, one of the ratchet teeth 19b engages the engaging pawl 34b. Accordingly, the rotation of the ring member 19 is stopped, whereby the low speed and high torque transmission path between the sun gear member 20 and the carrier gear 17 is connected.
In this manner, the mode of the power transmission mechanism 8 is switched from the low reduction ratio power transmission mode to the high reduction ratio power transmission mode, whereby the power transmission mechanism 8 is set to the high reduction ratio power transmission mode.

### (3) Switching From the High Reduction Ratio Power Transmission Mode to the Power Transmission Disconnection Mode (through the Low Reduction Power Transmission Mode)

As the motor 6 rotates in the reverse direction (the motor rotary shaft 6a rotates in the counterclockwise direction in Fig. 8: corresponding to rotation of the spool 4 in the belt-withdrawing direction (the direction α in Fig. 3)) in the high reduction ratio power transmission mode shown in Fig. 8, the lower-side connecting gear 26 and the pulleys 25 rotate in the reverse direction. Then, the clutch springs 24 also rotate in the reverse direction so that the clutch gear 31 and the rotary shaft 32 move to the right along the guide slot 11g while rotating the clutch arm 33 in the counterclockwise direction.

Since the clutch pawl 34 pivots in the clockwise direction along with the counter-clockwise rotation of the clutch arm 33, the clutch pawl 34 is positioned at the disengaging position not allowing the engagement of the clutch pawl 34 with the ratchet teeth 19b. Accordingly, the ring member 19 rotates freely, thereby disconnecting the low speed and high torque transmission path.

When the clutch gear 31 and the rotary shaft 32 reach the uppermost positions, the clutch gear 31 meshes with the external teeth 17b of the carrier gear 17 so that the power transmission mechanism 8 temporarily becomes the low reduction ratio power transmission mode shown in Fig. 7. Since the rightward movement of the clutch gear 31 and the rotary shaft 32 continues, however, the clutch gear 31 immediately comes off the external teeth 17b so that the clutch gear 31 rotates freely. Accordingly the high speed and low torque transmission path is temporarily connected and then immediately disconnected. When the high speed and low torque transmission path is connected temporarily, the motor 6 rotates in the reverse direction, and the spool 4 temporarily rotates in the belt-withdrawing direction α and stops soon.

As the rotary shaft 32 comes in contact with the right end of the guide slot 11g, further movement of the rotary shaft 32 is prevented so that the clutch gear 31, the rotary shaft 32, and the clutch springs 24 are stopped. The clutch gear 31 and the rotary shaft 32 are set to the rightmost positions shown in Fig. 6 as described in the above.
In this manner, the mode of the power transmission mechanism 8 is switched from the high reduction ratio power transmission mode to the power transmission disconnection mode, whereby the power transmission mechanism 8 is set to the power transmission disconnection mode.

In this embodiment, the mode of the power transmission mechanism 8 is switched by the control of the rotation of the motor 6.
Specifically with regard to the low reduction ratio power transmission mode, the mode is switched from the power transmission disconnection mode to the low reduction ratio power transmission mode and the low reduction ratio power transmission mode is continued when the motor 6 is controlled to rotate in the reverse direction, while the mode is switched from the low reduction power transmission mode to the power transmission disconnection mode so as to cancel the low reduction ratio power transmission mode when the motor 6 is controlled to rotate in the normal direction.
With regard to the high reduction power transmission mode, the mode is switched from the low reduction ratio power transmission mode to the high reduction ratio power transmission mode and the high reduction ratio power transmission mode is continued when the motor 6 is controlled to rotate in the normal direction, while the mode is switched from the high reduction ratio power transmission mode to the low reduction ratio power transmission mode so as to cancel the high reduction ratio power transmission mode when the motor 6 is controlled to rotate in the reverse direction.
As mentioned above, in the seat belt retractor in which the mode of the power transmission mechanism 8 is switched by changing the rotational direction of the motor 6, it is unknown which mode is selected in the power transmission mechanism 8 when conducting clutch release operation, that is, it is unknown which direction the motor 6 must be controlled to rotate. In this case, there may be a problem that desired clutch release operation is not performed. In addition, there is a possibility that the control of the rotation of the motor 6 is conducted even when the clutch is already in the OFF state (the power transmission disengaging state). In this case, unwanted rotation of the motor 6 may occur, thus causing problems such as noise.
To solve such problems, the seat belt retractor 1 of this embodiment is structured such that, when the clutch release operation is activated, the ECU 68 judges the transmission state and the clutch release operation is started in a suitable mode according to the result of the judgment.

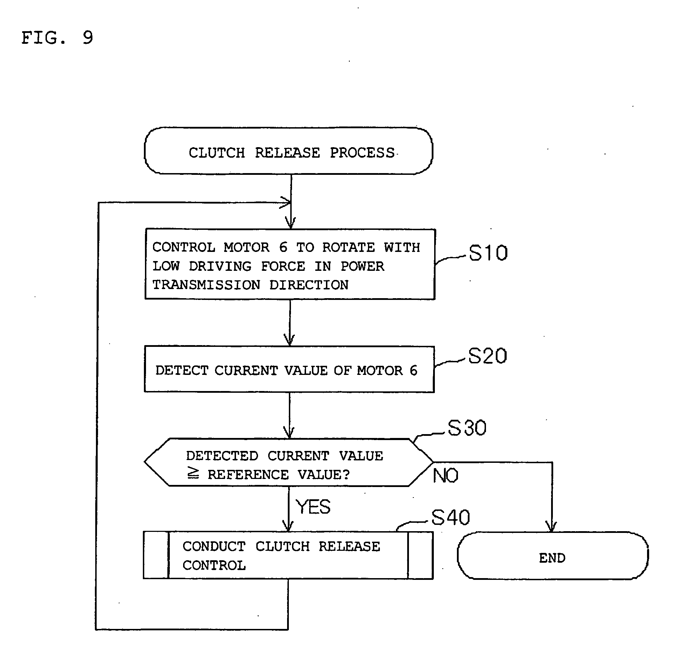

Hereinafter, "clutch release process (power transmission disengaging process)" specifically illustrating the aforementioned structure of this embodiment will be described with reference to Fig. 9. The clutch release process is conducted by the ECU 68.
In the clutch release process shown in Fig. 9, first in a step S10, the motor 6 is controlled to rotate in a mode allowing the judgment of transmission state, i.e., with such low driving force not to switch the transmission state.
In a step S20, the motor current value when the motor 6 is rotated in the step S10 is detected (measured). The motor current value is detected by a motor current detector 69 shown in Fig. 2.
In a step S30, the motor current value detected in the step S20 is compared to a reference value which is previously set. Specifically, when the motor current value detected in the step S20 is equal to or higher than the reference value, the load of the motor is relatively high. In this case, it is determined that the clutch is in the ON state (the low reduction ratio power transmission mode or the high reduction ratio power transmission mode). On the other hand, when the motor current value is not higher than the reference value, the load of the motor is relatively low. In this case, it is determined that the clutch is in the OFF state (the power transmission disconnection mode).
When it is determined that the clutch is in the ON state (YES in the step S30), the clutch release control is conducted in a step S40. On the other hand, when it is determined that the clutch is in the OFF state (NO in the step S30), the clutch release process is ended and the power transmission disconnected mode is continued. In the clutch release control in the step S40, the motor 6 is controlled to rotate in the reverse direction to release the power transmission mode (the low reduction ratio power transmission mode or the high reduction ratio power transmission mode).
By employing the aforementioned clutch release process, the clutch release operation can be conducted in a desired mode suitable for the transmission state of the power transmission mechanism 8. For example, it is possible to prevent the motor 6 from being controlled to rotate even when the clutch is already in the OFF state (the power transmission disengaging state) so as to prevent the occurrence of noise due to unwanted rotation of the motor.

Moreover, the seat belt retractor 1 of this embodiment has the following seven belt modes of the seat belt 3.

### (1) Belt storage mode

Belt storage mode is a belt mode in which the seat belt 3 is not used and fully wound onto the spool 4. In the seat belt retractor 1 in the belt storage mode, the motor 6 is not driven and the power transmission mechanism 8 is set to the power transmission disconnection mode. Therefore, only very weak belt tension is applied to the seat belt 3 (the reason why very weak belt tension is applied will be described later with regard to a belt winding and storing mode) and the power consumption is zero.

### (2) Belt withdrawing mode

Belt withdrawing mode is a belt mode in which the seat belt 3 is withdrawn from the spool 4 so as to be worn by the occupant. The seat belt retractor 1 in the belt withdrawing mode is also set in the power transmission disconnection mode. Therefore, the seat belt 3 can be withdrawn with small force. Also in this case, the motor 6 is not driven so that the power consumption is zero.

### (3) Belt winding and fitting mode

Belt winding and fitting mode is a belt mode in which after the seat belt 3 is withdrawn and the tongue (the tongue 62 shown in Fig. 1) is inserted into and latched with the buckle to turn ON the buckle switch (the buckle switch 66a shown in Fig. 1), excessively withdrawn part of the seat belt 3 is wound in order to fit the seat belt 3 to the occupant and a belt mode in which when the occupant moves so as to withdraw a predetermined amount of the seat belt 3 from the normally used state of the seat belt 3 (at this point, the buckle switch is in the ON state) and then the occupant returns to the original position, the withdrawn part of the seat belt is wound. In the seat belt retractor 1 in the belt winding and fitting mode, the motor 6 is driven to rotate in the belt winding direction and the power transmission mechanism 8 is set to the low reduction ratio power transmission mode. Therefore, the motor 6 is stopped when very small predetermined belt tension is generated after the seat belt 3 is rapidly wound with low torque, whereby the seat belt 3 is worn by and fitted to the occupant.

### (4) Normal wearing mode (comfortable mode)

Normal wearing mode (comfortable mode) is a belt mode in which the occupant wears the seat belt 3 in the normal state after the belt winding and fitting mode is terminated. In the seat belt retractor 1 in the normal wearing mode, the motor 6 is not driven and the power transmission mechanism 8 is set in the power transmission disconnection mode. Therefore, only very weak belt tension is applied to the seat belt 3 so that the occupant can wear the seat belt 3 without any stress. In addition, the power consumption is zero.

### (5) Warning mode

Warning mode is a belt mode in which when the system detects dozing of the driver or detects an obstacle in front of the vehicle in the driving direction while driving the vehicle with wearing the seat belt in the normal wearing mode, the seat belt 3 is wound repeatedly predetermined times so as to warn the driver. In the seat belt retractor 1 in the warning mode, the motor 6 is controlled to be driven repeatedly.
Therefore, the operation of applying relatively strong belt tension and very weak belt tension onto the seat belt 110 is repeated, thereby preventing the driver from dozing and drawing the driver's attention to the obstacle in front of the vehicle in the driving direction.

### (6) Emergency mode

Emergency mode is a belt mode which is set when the vehicle extremely likely have a collision with an obstacle or the like while driving the vehicle with wearing the seat belt in the normal wearing mode and comprises the following two stages.

### (i) Initial stage

In the seat belt retractor 1 in the initial stage of the emergency mode, the motor 6 is rotated with relatively high rotational torque in the normal direction. Then, from the power transmission disconnection mode, the clutch springs 24 rotate so as to move the clutch gear 31 and the rotary shaft 32 to the uppermost positions so that the clutch gear 31 meshes the external teeth 17b of the carrier gear 17. Since the slack of the seat belt 3 is removed and the tension on the seat belt 3 is not higher than the predetermined value at this point, the resistance from the carrier gear 17 to the clutch gear 31 is relatively small. Accordingly, even with relatively high rotational torque of the motor 6, the rotary shaft 32 does not rotate the clutch arm 33 so that the power transmission mechanism 8 is set to the low reduction ratio power transmission mode. Therefore, the rotation of the clutch gear 31 is transmitted to the carrier gear 17 so as to rotate the carrier gear 17, whereby the seat belt 3 is rapidly wound with low torque to promptly remove the slack of the seat belt 3.

### (ii) Late stage

As the slack of the seat belt 3 is removed in the aforementioned initial stage, the initial stage is followed by the late stage of the emergency mode. In the late stage, the tension on the seat belt 3 becomes larger than the predetermined value. Accordingly, the resistance from the carrier gear 17 to the clutch gear 31 becomes relatively large so as to stop the rotation of the carrier gear 17 and the clutch gear 31. However, the lower-side connecting gear 26 is forced to rotate by the rotational torque of the motor 6. By the rotational torque of the lower-side connecting gear 26, force is applied to the rotary shaft 32 in a direction toward the aforementioned leftmost position. At this time, since the rotational torque of the motor 6 is relatively high, moment for rotating the clutch arm 33 in the clockwise direction by the pushing force of the rotary shaft 32 is larger than moment against this moment in the clockwise direction by the engaging force between the engaging portion 33e and the recess 35b. Accordingly, the engagement between the engaging portion 33e of the clutch arm 33 and the recess 35b of the resistance spring 35 is cancelled so that the rotary shaft 32 moves toward the aforementioned leftmost position with rotating the clutch arm 33. Since the clutch pawl 34 rotates along with the rotation of the clutch arm 33, the engaging pawl 34b of the clutch pawl 34 engages one of the ratchet teeth 19b, thereby preventing the rotation of the ring member 19. As a result, the power transmission mechanism 8 is set to the high reduction ratio power transmission mode. Therefore, the seat belt 3 is wound with high torque so that the occupant is restrained with very strong belt tension.

### (7) Belt winding and storing mode

Belt winding and storing mode is a belt mode in which the seat belt 3 is fully wound to be in the storage state when the tongue (the tongue 62 in Fig. 1) is disengaged from the buckle for releasing the wearing of the seat belt 3 so that the buckle switch (the buckle switch 66a in Fig. 1) becomes OFF. In the seat belt retractor 1 in the belt winding and storing mode, the motor 6 is driven with relatively low rotational torque in the belt winding direction and the power transmission mechanism 8 is set to the low reduction ratio power transmission mode. Accordingly, the withdrawn seat belt 3 is promptly wound with low torque.
Thus, the seat belt 3 is fully wound and the motor 6 is stopped when a predetermined belt tension which is very weak is developed, whereby the seat belt 3 becomes to the belt storage mode in which the aforementioned very weak belt tension is applied to the seat belt 3.

In reference to the belt winding and storing mode, the seat belt retractor of this embodiment is structured to perform a control using the detection sensor (the detection sensor 50 in Fig. 2) to prevent various troubles such as a trouble in which the seat belt 3 is not stored and kept unwound even when the seat belt 3 is needed to be stored and a trouble in which the seat belt storing action is started even when the seat belt 3 is worn by the occupant and the seat belt storing action is therefore not needed, thereby increasing the reliability relating to the storing action for the seat belt 3.

Specifically, the control means (the ECU 68 in Fig. 1 and Fig. 2) determines, based on information relating to the rotation of the spool 4 (condition of the spool 4 whether it is rotated or not, rotational angle, rotational direction, rotational speed, rotational amount, and the like) which are directly detected by the detection sensor 50, whether the seat belt retractor is in a state suitable for storage of the seat belt 3. When it is determined that the seat belt retractor is in the state suitable for the storing action for the seat belt 3, the ECU 68 drives the motor 6 in the belt winding direction to start the storing action for the seat belt 3. As conditions for starting storage action of the seat belt 3, for example, the following first storage starting condition through the third storage starting condition are employed. When at least one of these storage starting conditions is satisfied, the storing action for the seat belt 3 is started.

The first storage starting condition is defined as a condition where it is detected that the spool 4 is not rotated after the buckle switch 66a is switched from ON to OFF. This is a state where, even when the occupant carries out the seat belt release operation, the storing action for the seat belt 3 is not conducted so that it is determined that it is preferable to conduct the storing action for the seat belt 3.
The second storage starting condition is defined as a condition where it is detected that the rotation of the spool 4 is stopped after the spool 4 rotates an angle exceeding a predetermined reference angle in a state that the buckle switch 66a is OFF and the motor 6 is stopped. This is a state where even when the occupant withdraws the seat belt, the occupant terminates the operation without latching the tongue 62 with the buckle 66 so that it is determined that it is preferable to conduct the storing action for the seat belt 3.
The third storage starting condition is defined as a condition where it is detected that the rotation of the spool 4 is stopped in a state that the buckle switch 66a is OFF and after a vehicle door is opened from the closed state. This is a state where the occupant conducts the seat belt release operation and is about to get off the vehicle so that it is determined that it is preferable to conduct the storing action for the seat belt 3.

As mentioned above, in the seat belt retractor 1 of this embodiment, it is determined that the seat belt storing operation is needed when at least one of the first through third storage starting conditions is satisfied. In response to this determination, the storing action for the seat belt 3 is started. According to the structure as mentioned above, it is possible to eliminate the troubles such as a trouble in which the seat belt 3 is not stored and kept unwound and a trouble in which the seat belt storing action is started when the seat belt 3 is worn by the occupant, thereby increasing the reliability relating to the seat belt retractor 1. In addition, it is possible to sensitively set the starting conditions for the seat belt storing operation according to the setting of the first through third storage starting conditions. Since the information relating to the rotation of the spool 4 is detected by the detection sensor 50, the information about the behavior of the spool-side component can be easily detected.
These conditions of this embodiment correspond to a condition that "said control means controls the seat belt retractor to be in said power transmission engaging state to perform the seat belt winding action when said control means determines, based on the information about behavior of said spool-side member detected by said detection sensor, that the seat belt storing operation is needed" and a condition that "when it is detected, based on the information about behavior of said spool-side member detected by said detection sensor, that the seat belt is kept unwound under at least one of conditions such as after the wear of the seat belt is released, after the operation of wearing the seat belt is halted, and when a vehicle occupant gets off the vehicle, said control means determines that the seat belt storing operation is needed" of the present invention.

Further, since the clutch release process for judging whether the clutch is in the ON state or the OFF state before the clutch release operation is conducted is employed, the seat belt retractor 1 of this embodiment can prevent the motor 6 from being controlled to rotate even when the clutch is already in the OFF state (the power transmission disengaging state) so as to prevent the occurrence of noise due to unwanted rotation of the motor.

Furthermore, since the power transmission mechanism 8 of the seat belt retractor 1 of this embodiment has two power transmission paths, i.e. the high speed and low torque power transmission path serving as the low reduction ratio power transmission mode and the low speed and high torque power transmission path serving as the high reduction ratio power transmission mode, the seat belt retractor 1 achieves two winding functions, i.e. rapid belt winding for removing slack on the seat belt 3 in the low reduction ratio power transmission mode, and high-torque belt winding for restraining the occupant in the high reduction ratio power transmission mode.

Because the transmission path can be selected from the two power transmission paths, the rotational torque of the motor 6 is efficiently transmitted to the spool 4, thereby performing the two winding-up functions in a sure manner with small power consumption. In particular, with the seat belt retractor 1 according to this embodiment, high-torque seat belt winding is carried out with high torque for restraining the passenger through the low speed and high torque power transmission path so that the motor 6 is driven with small rotational torque as compared with the conventional one. Thus, a small-sized motor can be employed as the motor 6, as well as driving the motor with reduced power consumption, thereby reducing the size of the seat belt retractor 1.
Because the aforementioned two winding functions are realized, the seat belt retractor 1 is provided with a pretensioning function by rotational torque of the motor 6. Therefore, this can eliminate the necessity of a pretensioner using reaction gas in the conventional seat belt retractor, thereby reducing the cost.

Furthermore, the mode of the power transmission mechanism 8 is set to the low reduction ratio power transmission mode or the high reduction ratio power transmission mode according to the tension of the seat belt 3, thereby easily performing mode switching without controlling rotational torque of the motor 6.
The power transmission mechanism 8 has the power transmission disconnection mode in which the rotational torque of the motor 6 is not transmitted to the spool 4, thereby allowing withdrawal of the seat belt 3, normal wearing of the seat belt 3 without applying stress to the occupant, and storage of the seat belt 3 when it is not used by the occupant without influence of the motor 6.

Since the winding and storing operation for the seat belt 3 is conducted only by the rotational torque of the motor 6, the biasing force of a winding means such as a spiral spring in the belt winding direction which always acts on the seat belt 3 can be eliminated or can be set to very small without an additional module such as a tension reducer.
In cases where the biasing force by the winding means is set to be in a minimal range required for the fitting operation when the occupant wears the seat belt 3, the rotation of the motor 6 is transmitted to the spool 4 in the low reduction ratio transmission mode so as to assist the winding of the seat belt 3, thereby securing the winding and storing operation for the seat belt 3.

Further, the high ratio speed reduction mechanism 7a is composed of a planetary gear mechanism, thereby reducing the size of the low speed and high torque transmission path. Accordingly, increase in size of the seat belt retractor 1 is inhibited even though the seat belt retractor 1 has the low reduction ratio power transmission mode and the high reduction ratio power transmission mode.

Furthermore, the carrier of the high ratio speed reduction mechanism 7a and the external teeth 17b of the low ratio speed reduction mechanism 7b are both composed of a single carrier gear 17, thereby reducing the number of the components of the seat belt retractor 1 and thus reducing the size of the seat belt retractor 1.
According to the tension on the seat belt 3, the power transmission mode switching mechanism 9 controls the rotation of the internal gear 19a of the planetary gear mechanism and controls the mesh between the small-diameter clutch gear 31 and the external teeth 17b of the large-diameter carrier gear 17, thereby easily switching the power transmission mode.

The power transmission mode switching means according to the present invention is not limited to the power transmission mode switching mechanism 9 using high torque and low torque of the motor 6 as mentioned above. Alternatively, a solenoid mechanism may be employed as the power transmission mode switching means.
The high ratio speed reduction mechanism 7a according to the present invention is not limited to such a configuration that the carrier of the high ratio speed reduction mechanism 7a and the external teeth 17b of the low ratio speed reduction mechanism 7b is both composed of the single carrier gear 17. Alternatively, the carrier of the high ratio speed reduction mechanism 7a and the external teeth 17b of the low ratio speed reduction mechanism 7b may be composed of respective components.

Moreover, the motor 6 has the constant rotational torque during switching of the power transmission mode. Alternatively, the rotational torque of the motor 6 may be controlled according to the belt modes such as the belt winding and fitting mode, the warning mode, the emergency mode, and the belt winding and storing mode.

### (Another embodiment)

The present invention is not limited to the aforementioned embodiment, so various variations and modifications may be made. For example, the following embodiments as variations of the aforementioned embodiment may be carried out.

The above embodiment has been described with regard to a case that the information about the rotational behavior of the spool 4 is detected by the detection sensor 50 and it is determined, based on the information about the rotational behavior, whether the seat belt storing operation is needed. According to the present invention, however, the object to be detected by the detection sensor may be a member other than the spool 4, i.e. a component on the side of the spool 4 which acts along with the rotation of the spool 4. For example, the behavior of the seat belt 3 may be detected.

The above embodiment has been described with regard to the seat belt retractor 1 having a structure capable of switching its state between the power transmission engaging state and the power transmission disengaging state according to the rotational behavior of the motor 6. Instead of the structure capable of switching its state between the power transmission engaging state and the power transmission disengaging state according to the rotational behavior of the motor, the present invention may employ a structure capable of switching its state between the power transmission engaging state and the power transmission disengaging state by an electromagnetic switching mechanism.

The above embodiment has been described with regard to the seat belt retractor 1 to be installed in an automobile, the present invention can be adopted to seat belt apparatuses to be installed in a vehicle such as automobile, aircraft, and boat and is suitably adopted to a seat belt retractor of a type that winds up the seat belt by a motor for restraining and protecting an occupant.
In the seat belt apparatus of the present invention, the rotational torque of the motor is more efficiently used so as to sensitively control the winding-up force of the spool so that it is suitably used as a seat belt apparatus for restraining and protecting an occupant in a vehicle such as automobile, aircraft, and boat.

## Claims

1. A seat belt retractor comprising:
a spool (4) which is capable of winding and unwinding a seat belt (3),
an electric motor (6),
a power transmission mechanism (8) which transmits the power of said electric motor (6) to said spool (4) so as to achieve the winding action and the unwinding action of said spool,
a detection sensor (50) which detects information about behavior of a spool-side member, and
a means (68) for switching between power transmission engaging state in which the power of said electric motor (6) is transmitted to said spool (4) and a power transmission disengaging state in which the power transmission is cancelled, wherein
said control means (68) controls the seat belt retractor to be in said power transmission engaging state to perform the seat belt winding action when said control means determines, based on the information about behavior of said spool-side member detected by said detection sensor (50), that a seat belt storing operation is needed.

2. A seat belt retractor as claimed in claim 1, wherein
when it is detected, based on the information about behavior of said spool-side member detected by said detection sensor (50), that the seat belt is kept unwound under at least one of conditions such as after the wear of the seat belt (3) is released, after the operation of wearing the seat belt is halted, and when a vehicle occupant gets off the vehicle, said control means determines that the seat belt storing operation is needed.

3. A seat belt retractor as claimed in claim 1 or 2, wherein
said detection sensor (50) is adapted to detect information about rotational behavior of said spool as said spool-side member.

4. A seat belt apparatus comprising:
a seat belt (3) to be worn by a vehicle occupant,
a seat belt buckle (66),
a buckle switch (66a) which is capable of detecting information about the connecting state of the seat belt (3) relative to said seat belt buckle, and
a seat belt retractor according to claim 1, 2 or 3, wherein
said control means (68) controls the seat belt retractor to be in said power transmission engaging state to perform the seat belt winding action when said control means determines, based on the information about behavior of said spool-side member detected by said detection sensor (50) and information about the connecting state of the seat belt detected by said buckle switch, that the seat belt storing operation is needed.

5. A seat belt apparatus as claimed in claim 4, wherein
when it is detected, based on the information about behavior of said spool-side member detected by said detection sensor (50) and the information about the connecting state of the seat belt detected by said buckle switch (66a), that the seat belt is kept unwound under at least one of conditions such as after the wear of the seat belt is released, after the operation of wearing the seat belt is halted, and when a vehicle occupant gets off the vehicle, said control means determines that the seat belt storing operation is needed.

6. A vehicle with a seat belt apparatus, wherein said seat belt apparatus as claimed in claim 4 or 5 is accommodated in an accommodating space in the vehicle.

## Patentansprüche

1. Sicherheitsgurtaufroller mit:
einer Spule (4), die einen Sicherheitsgurt (3) aufrollen und abrollen kann,
einem Elektromotor (6),
einem Kraftübertragungsmechanismus (8), der die Kraft des Elektromotors (6) zur Spule (4) überträgt, um das Aufrollen und das Abrollen der Spule zu bewirken,
einem Detektionssensor (50), der Informationen über das Verhalten eines spulenseitigen Teils detektiert, und
einer Steuereinrichtung (68) zum Umschalten des Kraftübertragungsmechanismus zwischen einem Kraftübertragungs-Einrückzustand, in dem die Kraft des Elektromotors (6) zur Spule (4) übertragen wird, und einem Kraftübertragungs-Ausrückzustand, in dem die Kraftübertragung aufgehoben ist, wobei
die Steuereinrichtung (68) den Sicherheitsgurtaufroller so steuert, daß er sich im Kraftübertragungs-Einrückzustand befindet, um das Sicherheitsgurt-Aufrollen zu bewirken, wenn die Steuereinrichtung auf der Grundlage von Informationen über das Verhalten des spulenseitigen Teils, die durch den Detektionssensor (50) detektiert werden, bestimmt, daß ein Sicherheitsgurt-Unterbringungsvorgang notwendig ist.

2. Sicherheitsgurtaufroller nach Anspruch 1, wobei
bei Detektion auf der Grundlage der Informationen über das Verhalten des spulenseitigen Teils, die durch den Detektionssensor (50) detektiert werden, daß der Sicherheitsgurt unter mindestens einer von Bedingungen abgerollt bleibt, z. B. nachdem das Anlegen des Sicherheitsgurts (3) gelöst ist, nachdem der Anlegevorgang des Sicherheitsgurts angehalten ist und wenn ein Fahrzeuginsasse aus dem Fahrzeug aussteigt, die Steuereinrichtung bestimmt, daß der Sicherheitsgurt-Unterbringungsvorgang notwendig ist.

3. Sicherheitsgurtaufroller nach Anspruch 1 oder 2, wobei
der Detektionssensor (50) geeignet ist, Informationen über das Drehverhalten der Spule als spulenseitiges Teil zu detektieren.

4. Sicherheitsgurtvorrichtung mit:
einem Sicherheitsgurt (3), der von einem Fahrzeuginsassen anzulegen ist,
einem Sicherheitsgurtschloß (66),
einem Schloßschalter (66a), der Informationen über den Verbindungszustand des Sicherheitsgurts (3) relativ zum Sicherheitsgurtschloß detektieren kann, und
einem Sicherheitsgurtaufroller nach Anspruch 1, 2 oder 3, wobei
die Steuereinrichtung (68) den Sicherheitsgurtaufroller so steuert, daß er sich im Kraftübertragungs-Einrückzustand befindet, um das Sicherheitsgurt-Aufrollen zu bewirken, wenn die Steuereinrichtung auf der Grundlage der Informationen über das Verhalten des spulenseitigen Teils, die durch den Detektionssensor (50) detektiert werden, und Informationen über den Verbindungszustand des Sicherheitsgurts, die durch den Schloßschalter detektiert werden, bestimmt, daß der Sicherheitsgurt-Unterbringungsvorgang notwendig ist.

5. Sicherheitsgurtvorrichtung nach Anspruch 4, wobei
bei Detektion auf der Grundlage der Informationen über das Verhalten des spulenseitigen Teils, die durch den Detektionssensor (50) detektiert werden, und der Informationen über den Verbindungszustand des Sicherheitsgurts, die durch den Schloßschalter (66a) detektiert werden, daß der Sicherheitsgurt unter mindestens einer von Bedingungen abgerollt bleibt, z. B. nachdem das Anlegen des Sicherheitsgurts gelöst ist, nachdem der Anlegevorgang des Sicherheitsgurts angehalten ist und wenn ein Fahrzeuginsasse aus dem Fahrzeug aussteigt, die Steuereinrichtung bestimmt, daß der Sicherheitsgurt-Unterbringungsvorgang notwendig ist.

6. Fahrzeug mit einer Sicherheitsgurtvorrichtung, wobei die Sicherheitsgurtvorrichtung nach Anspruch 4 oder 5 in einem Aufnahmeraum im Fahrzeug aufgenommen ist.

## Revendications

1. Rétracteur de ceinture de sécurité comportant :
◆ une bobine (4) apte à enrouler et dérouler une ceinture de sécurité (3),
◆ un moteur électrique (6),
◆ un mécanisme de transmission de l'énergie (8) qui transmet l'énergie dudit moteur électrique (6) à ladite bobine (4) de manière à accomplir l'action d'enroulement et l'action de déroulement de ladite bobine,
◆ un capteur de détection (50) qui capte des informations relatives au comportement d'un ensemble à côté de la bobine et
◆ un moyen de commande (68) pour commuter ledit mécanisme de transmission de l'énergie entre un état d'enclenchement de la transmission d'énergie, dans lequel l'énergie dudit moteur électrique (6) est transmise à ladite bobine (4), et un état de désenclenchement de la transmission d'énergie dans lequel la transmission d'énergie est supprimée, sachant que
ledit moyen de commande (68) commande le rétracteur de ceinture de sécurité de façon à ce qu'il soit dans ledit état d'enclenchement de la transmission d'énergie afin d'exécuter l'action d'enroulement de la ceinture de sécurité lorsque ledit moyen de commande détermine, sur la base des informations relatives au comportement dudit ensemble à côté de la bobine détectées par ledit capteur de détection (50), qu'une opération de rétraction de la ceinture de sécurité est requise.

2. Rétracteur de ceinture de sécurité selon la revendication 1, dans lequel, lorsqu'il est détecté, sur la base des informations relatives au comportement dudit ensemble à côté de la bobine détectées par ledit capteur de détection (50), que la ceinture de sécurité est maintenue déroulée dans au moins l'une des conditions suivantes : après que la ceinture de sécurité (3) a été débloquée, après que l'opération de port de la ceinture de sécurité a été arrêtée et lorsqu'un passager sort du véhicule, ledit moyen de commande estime que l'opération de rétraction de la ceinture de sécurité est requise.

3. Rétracteur de ceinture de sécurité selon la revendication 1 ou 2, dans lequel ledit capteur de détection (50) se prête à la détection d'informations relatives au comportement rotatoire de ladite bobine en tant que dit ensemble à côté de la bobine.

4. Dispositif de ceinture de sécurité comportant:
◆ une ceinture de sécurité (3) devant être portée par un passager,
◆ une boucle de ceinture de sécurité (66),
◆ un commutateur de boucle (66a) apte à détecter des informations relatives à l'état de connexion de la ceinture de sécurité (3) par rapport à ladite boucle de ceinture de sécurité et
◆ un rétracteur de ceinture de sécurité selon la revendication 1, 2 ou 3, dans lequel
ledit moyen de commande (68) commande le rétracteur de ceinture de sécurité de façon à ce qu'il soit dans ledit état d'enclenchement de la transmission d'énergie afin d'exécuter l'action d'enroulement de la ceinture de sécurité lorsque ledit moyen de commande estime, sur la base des informations relatives au comportement dudit ensemble à côté de la bobine détectées par ledit capteur de détection (50) et d'informations relatives à l'état de connexion de la ceinture de sécurité détectées par ledit commutateur de boucle, que l'opération de rétraction de la ceinture de sécurité est requise.

5. Dispositif de ceinture de sécurité selon la revendication 4, dans lequel, lorsqu'il est détecté, sur la base des informations relatives au comportement dudit ensemble à côté de la bobine détectées par ledit capteur de détection (50) et des informations relatives à l'état de connexion de la ceinture de sécurité détectées par ledit commutateur de boucle (66a), que la ceinture de sécurité est maintenue déroulée dans au moins l'une des conditions suivantes : après que la ceinture de sécurité a été débloquée, après que l'opération de port de la ceinture de sécurité a été arrêtée et lorsqu'un passager sort du véhicule, ledit moyen de commande estime que l'opération de rétraction de la ceinture de sécurité est requise.

6. Véhicule comportant un dispositif de ceinture de sécurité, dans lequel ledit dispositif de ceinture de sécurité selon la revendication 4 ou 5 est placé dans un espace de logement situé dans le véhicule.
